# EUROPEAN PATENT APPLICATION

(11) **EP 3 110 143 A1**
(43) Date of publication of application: **28.12.2016**
(21) Application number: 15751692.3
(22) Date of filing: 13.02.2015
(51) Int. Cl.: H04N 7/18, G08B 13/196, H04N 19/23

(54) **IMAGE TRANSMISSION DEVICE AND IMAGE TRANSMISSION SYSTEM**

(30) Priority: 21.02.2014 JP 2014031985
(71) Applicant: Panasonic Intellectual Property Management Co., Ltd., Osaka-shi, Osaka 570-6207 (JP)
(72) Inventor: YAMANAKA, Mutsuhiro, Osaka-shi, Osaka 540-6207 (JP); ONISHI, Katsunori, Osaka-shi, Osaka 540-6207 (JP)
(74) Representative: Appelt, Christian W.
(86) International application number: PCT/JP2015/000649
(87) International publication number: WO 2015/125441

(57) **Abstract**

An image transmission device (1) includes an image camera (11), an image processor (12), a transmitter (13), a storage (14) and a controller (10). The storage (14) is configured to store two or more operating conditions for the image processor (12). The controller (10) is configured to select an operating condition corresponding to an image captured with the image camera (11) from the two or more operating conditions stored in the storage (14) and allow the image processor (12) to operate in accordance with the selected operating condition.

## Description

### Technical Field

The invention relates to an image transmission device configured to transmit an image(s) captured with a camera via a transmission line, and an image transmission system including the image transmission device.

### Background Art

JP 2001-028740 A (hereinafter called a "Document 1") exemplifies an image transceiver system, a camera device and a host device, as a conventional example.

In the conventional example described in Document 1, the camera device (a video camera) is connected with the host device (a note type personal computer) via either of a wired transmission line and a wireless transmission line as two kinds of transmission lines or media. The host device judges which of the transmission lines is connected with the camera device, and transmits control information (enabling or disabling of image coding, compression ratio, etc.) corresponding to each transmission line. The camera device performs encoding of an image(s) or changing the compression ratio in accordance with the control information received from the host device. When the camera device is connected with two or more host devices via the wireless transmission line, the camera device can transmit a captured image(s) individually to the host devices.

Incidentally, when a camera device (an image transmission device) in the conventional example is installed in an arbitrary (indoor or outdoor) location, a capture condition of the camera device may change by an accident. For example, when the camera device is used for the application of intruder surveillance, the surveillance area may not be captured as a result of an intruder moving the camera device to change the capture area or covering the camera device with a cloth or the like.

There is however a possibility that in the conventional example a user (a surveillant) cannot perceive a change in the capture condition of the camera device unless confirming images on the display screen of the host device. In addition, the camera device continuing capturing images and transmitting the images with the change in the capture condition not perceived causes waste of resources of the camera device and the host device.

The present invention has been achieved in view of the above circumstances, and an object thereof is to reduce waste of resources and surely transmit a necessary image(s).

### Summary of Invention

An image transmission device of the present invention includes an image capturing device, an image processing device, a transmission device, a storage device and a control device. The image capturing device is configured to capture an image. The image processing device is configured to perform image processing of the image captured with the image capturing device. The transmission device is configured to transmit an image obtained by the image processing device to one or more image display devices via a transmission line. The storage device is configured to store two or more kinds of operating conditions for the image processing device. The control device is configured to select an operating condition corresponding to the image captured with the image capturing device from the two or more kinds of operating conditions stored in the storage device to allow the image processing device to operate in accordance with the selected operating condition.

The image transmission device and an image transmission system, according to the present invention can reduce waste of resources and surely transmit an necessary image(s).

### Brief Description of Drawings

The figures depict one or more implementations in accordance with the present teaching, by way of example only, not by way of limitations. In the figure, like reference numerals refer to the same or similar elements where:
FIG. 1 is a block diagram of an image transmission device and an image transmission system, in accordance with an embodiment of the present invention;
FIG. 2 is a perspective view of the image transmission device;
FIG. 3 is a flow chart depicting an operation of the image transmission device;
FIG. 4 is a view illustrating image processing in the embodiment;
FIG. 5 is a view illustrating image processing in the embodiment;
FIG. 6 is a view illustrating image processing in the embodiment;
FIG. 7 is a view illustrating image processing in the embodiment; and
FIG. 8 is a view illustrating image processing in the embodiment.

### Description of Embodiments

An image transmission device and an image transmission system, in accordance with an embodiment of the present invention will be hereinafter explained with reference to the drawings.

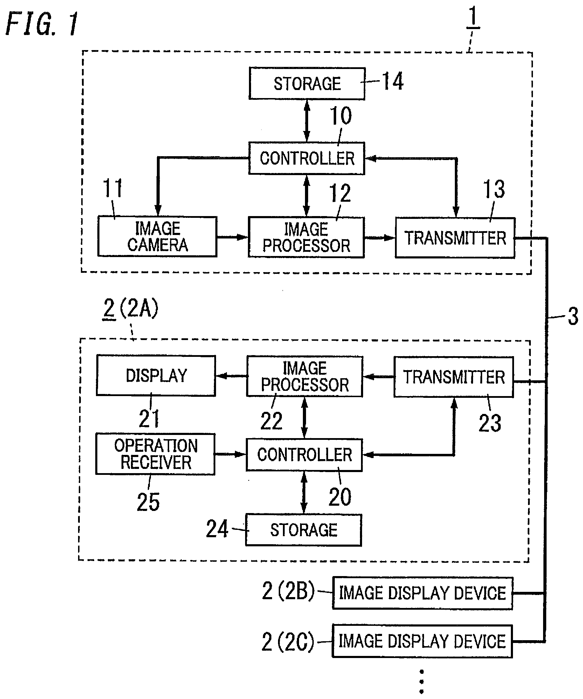

As shown in FIG. 1, the image transmission system in the embodiment has a configuration in which an image transmission device 1 is connected with one or more image display devices 2 via a transmission line 3. Here, the transmission line 3 may be a wired transmission line such as metal wires, an optical fiber and a coaxial cable, or a wireless transmission line such as a radio transmission medium. In FIG. 1, just three image display devices 2 are shown, but the system may have a configuration in which one, two, or four or more image display devices 2 may be connected via the transmission line 3.

The image transmission device 1 includes a controller (a control device) 10, an image camera (an image capturing device) 11, an image processor (an image processing device) 12, a transmitter (a transmission device) 13 and a storage (a storage device) 14.

The image camera 11 is configured to take images (still images or pictures (moving images)). For example, the image camera 11 has a solid-state image sensing device, optical components, a signal processing circuit and the like, which are not illustrated. Examples of the solid-state image sensing device include a CCD (Charge Coupled Devices) image sensor, a CMOS (Complementary Metal Oxide Semiconductor) image sensor and the like. The optical components include a lens for focusing beams of light on the solid-state image sensing device, a diaphragm (iris) for adjusting the amount of light that enters the solid-state image sensing device, and the like.

The signal processing circuit is configured to scan all pixels (photodetectors) of the solid-state image sensing device and to obtain respective values (electric charges) of the pixels as analog electrical signals to convert the analog electrical signals into digital signals (image data). Here, the signal processing circuit is configured to generate image data at a prescribed frame rate (e.g., 30fps (frame per second), 60fps or the like). Such a solid-state image sensing device and a signal processing circuit are well known, and therefore the illustration and explanation of the detailed configurations are omitted.

The image processor 12 is configured to perform image processing of images (captured images) taken with the image camera 11. For example, the image processor 12 is composed of a frame memory and a DSP (Digital Signal Processor). The frame memory is also called a frame buffer and configured to store one or more frames of image data from the image camera 11. The DSP is configured to perform various image processing by performing a product-sum operation with respect to image data obtained from the frame memory. However, the image processor 12 may be composed of one or more MPUs (Micro-Processing Units) and software for image processing performed by the one or more MPUs.

For example, the image processor 12 is configured to perform image processing such as a compression encoding process for compressing and encoding image data by a prescribed compression encoding method and a human detection process for analyzing image data to detect a moving object (a person). The compression encoding method performed in the compression encoding processing by the image processor 12 is preferably H.264/MPEG-4 AVC or the like with respect to pictures and preferably JPEG or the like with respect to still images.

The image processor 12 is also configured to calculate (detect) a degree of time series variation in images from the image camera 11 to supply the calculated (detected) degree to the controller 10. The degree will be described later.

The transmitter 13 is configured to transmit an image (a processed image) obtained by the image processing of the image processor 12 to one or more image display devices 2 via the transmission line 3. For example, the transmitter 13 is configured to divide image data compressed and encoded with the image processor 12 into packets, the number of which corresponds to the size of the image data. The transmitter 13 is further configured to generate a transmission signal by modulating the divided packets in accordance with a prescribed digital modulation method (BPSK method, QAM method, OFDM method or the like) to transmit the transmission signal to one or more image display devices 2 via the transmission line 3.

The controller 10 is composed of hardware including one or more MPUs (Micro-Processing Units) and one or more memories, and software including programs that are stored in the one or more memories and to be executed by the one or more MPUs. That is, the controller 10 is configured to execute each program through the one or more MPUs (computers), thereby performing various processing to be described later.

The storage 14 is configured to store two or more kinds of operating conditions for the image processor 12. For example, the storage 14 is formed of a rewritable nonvolatile semiconductor memory such as a flash memory. The operating conditions for the image processor 12 include at least the number of pixels, the number of frames, frame intervals and a compression specification (a compression method), of an image to be transmitted to one or more image display devices 2.

In the example of FIG. 1, the image transmission device 1 is connected with image display devices 2 via the transmission line 3. In this example, the storage 14 is configured to store a data table representing respective correspondence relations between identification codes respectively assigned to the image display devices 2 (2A, 2B, 2C, ...) in order to individually specify the image display devices 2 and two or more kinds of operating conditions per image display device 2. As another example, the storage 14 may store a data table representing respective correspondence relations between one or more user IDs respectively assigned to one or more users and two or more operating conditions per user ID, along with the identification codes for individually identifying the image display devices 2 or in place of the identification codes. In this case, the user IDs are preferably related with respective passwords in view of security secure. That is, it is preferable that the controller 10 be configured to authenticate each user based on respective combinations of the user IDs and the passwords stored in the storage 14.

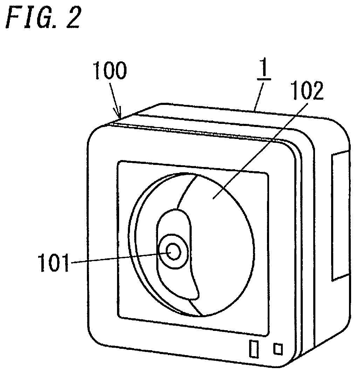

Here, as shown in FIG. 2, the image transmission device 1 in the embodiment is composed of a housing 100 formed of a synthetic resin molding shaped like a rectangular cuboid, as well as the controller 10, the image camera 11, the image processor 12, the transmitter 13 and the storage 14 which are housed in the housing 100. A lens cover 102 shaped like a hemisphere is provided on a front face of the housing 100 so as to be free to rotate. The solid-state image sensing device and the optical components (a lens 101) of the image camera 11 are fixed to the lens cover 102. That is, the solid-state image sensing device and the lens 101 have an orientation (a capture range) varying according to the rotation of the lens cover 102 by a drive mechanism (not shown). The drive mechanism is configured to be controlled by the controller 10. The housing 100 is configured to be put on a desk (not shown) or fixed on a wall, a ceiling or the like.

The image transmission device 1 in the embodiment is called a network camera in general, and is used for, e.g. a surveillance application in a dwelling. For example, it is installed in the dwelling and transmits images captured in the dwelling to one or more image display devices 2. However, the installation location of the image transmission device 1 in the embodiment is not limited to inside the dwelling (indoor location), but may be outside the dwelling (a side of the dwelling or outdoor location).

As shown in FIG. 1, each image display device 2 includes a controller 20, a display (a display device) 21, an image processor 22, a transmitter (a second transmission device) 23, a storage 24 and an operation receiver (an operation input device) 25.

The transmitter 23 is configured to receive a transmission signal transmitted via the transmission line 3 and demodulate the transmission signal in accordance with a prescribed digital demodulation method to obtain packets (data). The transmitter 23 is also configured to reconstruct (one frame of) original image data from the packets (data) to supply the reconstructed image data to the image processor 22. The transmitter 23 is further configured to transmit a transmission signal containing data exclusive of the image data, for example control data for giving an instruction to the image transmission device 1 via the transmission line 3.

The image processor 22 is composed of a frame memory and a DSP, for example. The frame memory is configured to store the image data from the transmitter 23. The DSP is configured to perform various image processing by performing a product-sum operation with respect to the image data obtained from the frame memory. The image processing by the image processor 22 will be described later.

The display 21 has, for example a liquid crystal display and a drive circuit for the liquid crystal display. However, in place of the liquid crystal display, the display 21 may have an organic EL display and a drive circuit for the organic EL display. The drive circuit is configured to receive image data from the image processor 22 via a DVI (Digital Visual Interface) and drive the liquid crystal display to display an image (a picture or a still image) corresponding to the received image data.

The operation receiver 25 is configured to receive an operation input by a user to supply an electrical signal (an operation signal) corresponding to the operation input to the controller 20. This sort of operation receiver 25 is formed of an input device such as a touch panel or a keyboard.

The controller 20 is composed of hardware including one or more MPUs and one or more memories and software including programs that are stored in the one or more memories and to be executed by the one or more MPUs. That is, the controller 20 is configured to execute each program through the one or more MPUs, thereby performing various processes to be described later.

The storage 24 is formed of a rewritable nonvolatile semiconductor memory such as a flash memory and stores an unique identification code.

Desirably, each image display device 2 includes a wired or wireless communication function and a device (a liquid crystal display or the like) for displaying images like a desktop or note type personal computer, a tablet terminal or a smart phone. In the case where an image display device 2 is such a personal computer, a tablet terminal or a smart phone, the display 21 and the operation receiver 25 thereof may be unified as a touch panel (that is also called a touch screen).

A basic operation of the image transmission system in the embodiment will be explained.

In an image display device 2 (e.g., 2A), when the operation receiver 25 receives a given operation input, the controller 20 generates a command for an image transmission request (an image request command). The transmitter 23 generates a transmission signal containing the image request command from the controller 20 to transmit the transmission signal to the image transmission device 1 via the transmission line 3.

In the image transmission device 1, the transmitter 13 receives the transmission signal and provides the controller 10 with the image request command and a source address obtained by demodulating the transmission signal. Here, the source address is a unique identification code (e.g., IP address) assigned to the image display device 2 (e.g., 2A), and two or more identification codes are assigned to the two or more image display devices 2 (2A, 2B, 2C, ...), respectively.

When receiving the image request command and the source address, the controller 10 takes an operating condition corresponding to the source address (the identification code) from the data table of the storage 14. The controller 10 then activates the image processor 12 in accordance with the operating condition.

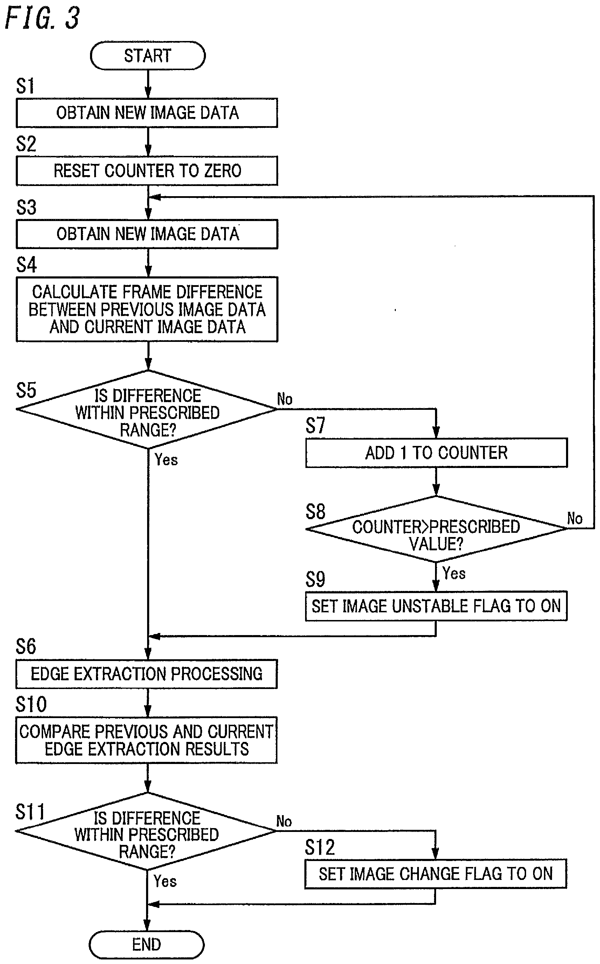

The image processor 12 calculates (detects) a degree of time series variation in images in accordance with the procedure of the flow chart shown in FIG. 3. That is, the image processor 12 obtains new image data from the image camera 11 (step S1), and then resets a counter thereof to zero (step S2). The image processor 12 then obtains next new image data from the image camera 11 (step S3), and calculates a frame difference between the previous image data and the current image data (step S4).

The image processor 12 judges whether or not a value of the frame difference is within a prescribed range (step S5). Specifically, the image processor 12 judges whether or not each pixel difference between the frames is a threshold or more, and then extracts a region formed of pixels having the threshold or more as a region of a moving object. The image processor 12 then judges whether or not a moving range (a moving distance) of the extracted region of the moving object is within the prescribed range (a prescribed distance or less). When the moving range is within the prescribed range (the moving distance is the prescribed distance or less), the image processor 12 performs an edge (outline) extraction processing with respect to the current image data (step S6). The controller 10 stores a result of the edge extraction processing (hereinafter called an "edge extraction result") in the storage 14. Thus, the edge extraction result with respect to the previous image data is stored in the storage 14. On the other hand, when the moving range is out of the prescribed range (the moving distance exceeds the prescribed distance), the image processor 12 adds 1 to the counter (step S7). The image processor 12 compares the value of the counter with a prescribed value (step S8), and returns to step S3 when the value of the counter is the prescribed value or less. When the value of the counter exceeds the prescribed value, the image processor 12 sets an image unstable flag (a first flag) stored in the storage 14 to ON (step S9), and proceeds to step S6 to perform the edge extraction processing with respect to the current image data.

The image processor 12 then compares the edge extraction result with respect to the previous image data with the edge extraction result with respect to the current image data to calculate (detect) a difference from both the edge extraction results (e.g., a difference in shapes, positions or the like between the extracted edges) (step S10). In the present embodiment, the difference is calculated as a difference value between the previous edge extraction result and the current edge extraction result.

The image processor 12 judges whether or not the difference (difference value) between the edge extraction results is within the prescribed range (step S11), and finishes the processing when it is within the prescribed range. For example, when a difference value between both sizes of the edge shapes is a prescribed value or less, or when a difference value between both positions of the edges is a prescribed value or less, the processing is finished. On the other hand, when the difference between the edge extraction results is out of the prescribed range, the image processor 12 sets an image change flag (a second flag) stored in the storage 14 to ON (step S12), and finishes the processing. For example, when the difference value between both sizes of the edge shapes exceeds the prescribed value, or when the difference value between both positions of the edges exceeds the prescribed value, the image processor 12 sets the second flag to ON, and finishes the processing.

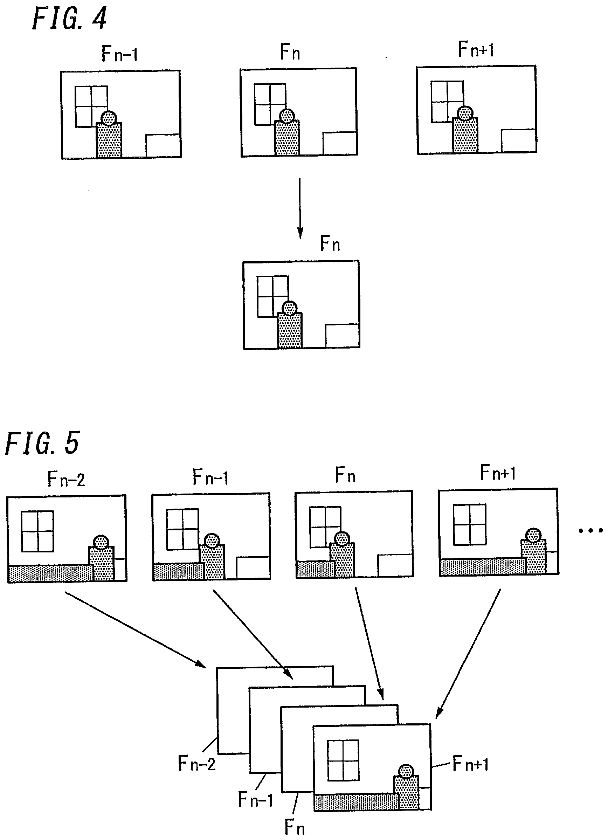

In the embodiment, the image processor 12 is configured to detect a specified subject(s) (e.g., a person(s) as a moving object(s), a stationary object(s) such as a window(s) or a moving object(s) which a person(s) carries(carry)) from the edge extraction results. In the example of FIG. 4, a person scarcely moves (or the person is stationary) in two or more (in the figure, three) images of continuous frames Fₙ₋₁, Fₙ, Fₙ₊₁. In this example, each of the image unstable flag and the image change flag is considered to be OFF in the image processing by the image processor 12 as stated above.

The controller 10 selects and obtains an operating condition (a first operating condition in the case of no moving object being detected) corresponding to the image unstable flag and the image change flag set to OFF from two or more operating conditions stored in the storage 14. Preferably, the controller 10 instructs the image processor 12 to convert an image (a still image) of a frame Fₙ of the frames Fₙ₋₁, Fₙ, Fₙ₊₁ into a JPEG image in accordance with the operating condition.

The image processor 12 converts the image of the frame Fₙ into a JPEG image to be supplied to the transmitter 13 in accordance with the instruction of the controller 10. The transmitter 13 transmits the JPEG image supplied from the image processor 12 to one or more image display devices 2 via the transmission line 3. In this case, the image transmission device 1 transmits not pictures but a still image, as images representing a small change of the subject. It is accordingly possible to reduce waste of resources and surely transmit a necessary image.

In the example of FIG. 5, the orientation of the image transmission device 1 (the image capture range of the image camera 11) is unchanged and a subject (a person and/or a moving object (e.g., a load or the like)) largely moves, in two or more (in the example, four or more) images of frames Fₙ₋₂, Fₙ₋₁, Fₙ, Fₙ₊₁. In this case, the image unstable flag in the image processing by the image processor 12 is considered to be ON because the subject (the person and/or the moving object) largely moves. The image change flag is also considered to be OFF because (a) subjects other than the person ((a) stationary objects such as a piece(s) of furniture and a window(s)) do(does) not move in the edge extraction results by the image processor 12. A rectangle diagram at a lower left within each frame shown in FIG. 5 is a load which a person carries.

The controller 10 selects and obtains an operating condition (a first operating condition in the case of one or more moving objects being detected) corresponding to the image unstable flag of ON and the image change flag of OFF from the operating conditions stored in the storage 14. Preferably, the controller 10 then instructs the image processor 12 to perform compression encoding of the images of the frames Fₙ₋₂, Fₙ₋₁, Fₙ, Fₙ₊₁ in accordance with the obtained operating condition to obtain pictures.

The image processor 12 performs the compression encoding of the images of the frames Fₙ₋₂, Fₙ₋₁, Fₙ, Fₙ₊₁ to obtain pictures to be supplied to the transmitter 13 in accordance with the instruction of the controller 10. The transmitter 13 transmits the pieces of image data (picture data) supplied from the image processor 12 to one or more image display devices 2 via the transmission line 3. In this case, the image transmission device 1 transmits not a still image but pictures, as images representing a large change of the subject. It is accordingly possible to monitor inside the dwelling in detail.

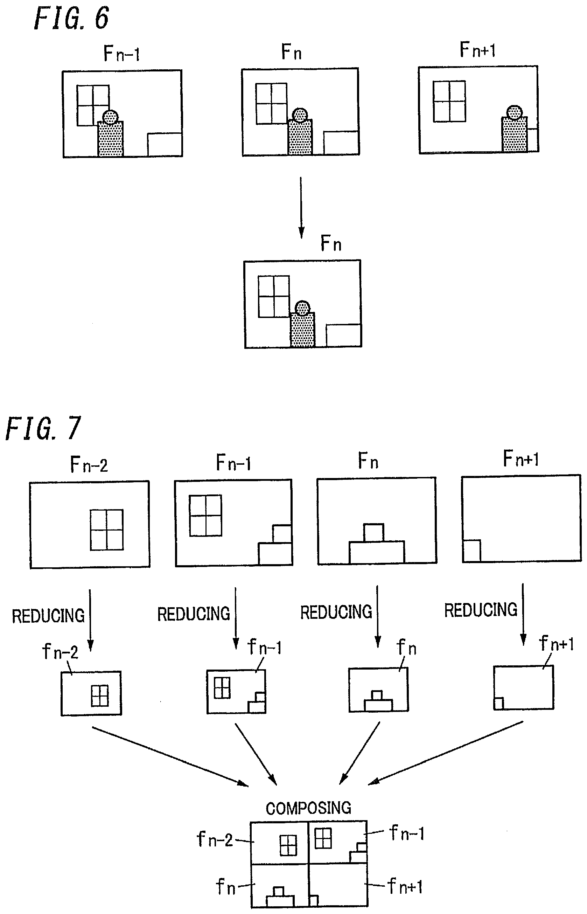

In an example of FIG. 6 as an alternative example of FIG. 5, a person largely moves and/or subjects other than the person and/or a moving object(s) (stationary objects such as a window and a piece of furniture) do not move in two or more (in the figure, three) images of continuous frames Fₙ₋₁, Fₙ, Fₙ₊₁. Also in this case, the image unstable flag and the image change flag are considered to be ON and OFF, respectively, in the image processing by the image processor 12.

In the alternative example, the controller 10 may be configured to instruct the image processor 12 to convert an image (a still image) of a frame Fₙ of the frames Fₙ₋₁, Fₙ, Fₙ₊₁ into a JPEG image in accordance with the operating condition (an operating condition different from that of FIG. 5). Preferably, the image (the frame) selected by the controller 10 is an image in which the person is in a position nearest to a center of the image.

The image processor 12 converts the image of the frame Fₙ into a JPEG image to be supplied to the transmitter 13 in accordance with the instruction of the controller 10. The transmitter 13 transmits the JPEG image supplied from the image processor 12 to one or more image display devices 2 via the transmission line 3. In this case, the image transmission device 1 transmits not pictures but a still image, as images representing a large change of the main subject (a person and/or a moving object) and small changes of other subjects (stationary objects like a piece of furniture and the like). It is accordingly possible to reduce waste of resources and surely transmit a necessary image.

The image unstable flag is OFF when a state after the orientation of the image transmission device 1 (the image capture range of the image camera 11) is changed is maintained, or when a state in which the lens 101 is covered with a cloth or the like is maintained, because continuous frames have no large change. On the other hand, the image change flag is ON because one or more subjects largely move in comparison with a previous edge extraction result.

In this case, the controller 10 selects and obtains an operating condition (a second operating condition in the case of no moving object being detected) corresponding to the image unstable flag of OFF and the image change flag of ON from the operating conditions stored in the storage 14.

The controller 10 instructs the image processor 12 to reduce the frames Fₙ₋₂, Fₙ₋₁, Fₙ, Fₙ₊₁ and arrange the images of the reduces frames fₙ₋₂, fₙ₋₁, fn, fₙ₊₁ (thumbnail images) in columns to obtain one still image.

The image processor 12 converts the images of the four frames Fₙ₋₂, Fₙ₋₁, Fₙ, Fₙ₊₁ into reduced JPEG images and arranges the JPEG images of the four frames fₙ₋₂, fₙ₋₁, fₙ, fₙ₊₁ in columns to obtain one frame of JPEG image (see FIG. 7). The transmitter 13 transmits the JPEG image supplied from the image processor 12 to one or more image display devices 2 via the transmission line 3. In the one or more image display devices 2, the JPEG image is displayed on one or more displays 21 thereof. A user(s) (a surveillant(s)) can be given attention and perform proper countermeasures.

The image transmission device 1 in the embodiment may be moved or rolled by, e.g. a pet(s) (a dog(s) or a cat(s)) at home when the image transmission device 1 is installed on a desktop or a place on a shelf. In this case, captured images may have a considerably large frame difference, as a degree of a time series variation, in two or more (in the figure, four) frames Fₙ₋₂, Fₙ₋₁, Fₙ, Fₙ₊₁ (see FIG. 7). In the image processing by the image processor 12, each of the image unstable flag and the image change flag is considered to be ON.

In this case, the controller 10 selects and obtains an operating condition (a second operating condition in the case of one or more moving objects being detected) corresponding to the image unstable flag and the image change flag each of which is ON from the operating conditions stored in the storage 14. Preferably, the controller 10 performs at least one of second to fourth processing to be described later in accordance with the obtained operating condition. More preferably, the controller 10 further performs a first processing.

In the first processing, the controller 10 generates a message representing that the image camera 11 is moved, and allows the transmitter 13 to transmit a transmission signal containing the message to one or more image display devices 2. In any of the image display devices 2 that receive the message, the controller 20 allows the display 21 to display the message. Accordingly, a user(s) (a surveillant(s)) can be given attention and perform proper countermeasures.

In the second processing, the controller 10 selects any one frame (e.g., Fₙ) from two or more frames Fₙ₋₂, Fₙ₋₁, Fₙ, Fₙ₊₁. The controller 10 then instructs the image processor 12 to convert an image (a still image) of the selected frame Fₙ into a reduced JPEG image. Alternatively, the controller 10 instructs the image processor 12 to convert the image (the still image) of the selected frame Fₙ into a JPEG image having a high compression ratio.

The image processor 12 converts the image of the frame Fₙ into the reduced JPEG image or the JPEG image having the high compression ratio to be supplied to the transmitter 13 in accordance with the instruction of the controller 10. The transmitter 13 transmits the JPEG image supplied from the image processor 12 to one or more image display devices 2 via the transmission line 3. In the one or more image display devices 2, the JPEG image is displayed on one or more displays 21 thereof. Accordingly, a user(s) (a surveillant(s)) can be given attention and perform proper countermeasures.

In the third processing, the controller 10 instructs the image processor 12 to reduce the frames Fₙ₋₂, Fₙ₋₁, Fₙ, Fₙ₊₁ and arranges images of the reduced frames fₙ₋₂, fₙ₋₁, fₙ, fₙ₊₁ in columns to obtain one still image (see FIG. 7).

The image processor 12 converts the images of the four frames Fₙ₋₂, Fₙ₋₁, Fₙ, Fₙ₊₁ into reduced JPEG images and arranges the JPEG images of the four frames fₙ₋₂, fₙ₋₁, fₙ, fₙ₊₁ in columns to obtain one frame of JPEG image. The transmitter 13 transmits the JPEG image supplied from the image processor 12 to one or more image display devices 2 via the transmission line 3. In the one or more image display devices 2, the JEPG image is displayed on one or more displays 21 thereof. Accordingly, a user(s) (a surveillant(s)) can be given attention and perform proper countermeasures.

In the fourth processing, the controller 10 instructs the image processor 12 to produce pictures, the number of pixels of each of which is decreased.

The image processor 12 decreases the number of pixels of each of the frames (performs pixel thinning), thereby producing reduced pictures in accordance with the instruction of the controller 10. The transmitter 13 transmits the pictures produced by the image processor 12 to one or more image display devices 2 via the transmission line 3. In the one or more image display devices 2, the reduced pictures are displayed on one or more displays 21 thereof. Accordingly, a user(s) (a surveillant(s)) can be given attention and perform proper countermeasures.

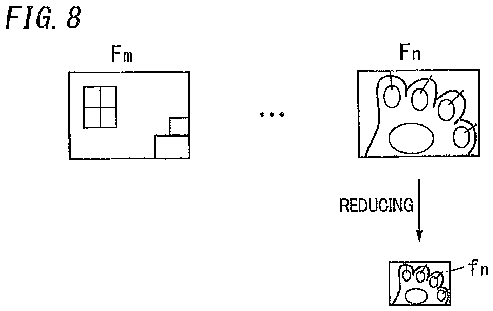

The abovementioned abnormal state may occur until the image transmission device 1 receives the current image request command after transmitting an image(s) in response to the previous image request command (see FIG. 8). The image processor 12 therefore calculates a degree of a time series variation between an image Fₘ corresponding to the previous image request command and an image Fₙ corresponding to the current image request command in accordance with the flow chart shown in FIG. 3. When judging that the degree exceeds an upper limit (the image unstable flag becomes ON), the image processor 12 transmits a judgement result to the controller 10. Preferably, when receiving the judgement result, the controller 10 selects an operating condition from the storage 14 to perform at least one of two kinds of processing to be described below.

In a first processing, the controller 10 produces a message representing an abnormal occurrence of the image transmission device 1 (e.g., representing that it has fallen), and instructs the transmitter 13 to transmit a transmission signal containing the message to one or more image display devices 2. In any of the image display devices 2 that receive the message, the controller 20 allows the display 21 to display the message. Accordingly, a user(s) (a surveillant(s)) can be given attention and perform proper countermeasures.

In a second processing, the controller 10 instructs the image processor 12 to convert an image (a still image) of frames Fₙ corresponding to the current image request command into a reduced JPEG image fₙ. Alternatively, the controller 10 instructs the image processor 12 to convert the image (the still image) of the frames Fₙ into a JPEG image having a high compression ratio.

The image processor 12 converts the image of a frame Fₙ into the reduced JPEG image or the JEPG image having the high compression ratio, to be supplied to the transmitter 13 in accordance with the instruction of the controller 10. The transmitter 13 transmits the JPEG image supplied from the image processor 12 to one or more image display devices 2 via the transmission line 3. In the one or more image display devices 2, the JPEG image is displayed on one or more displays 21 thereof. Accordingly, a user(s) (a surveillant(s)) can be given attention and perform proper countermeasures.

As stated above, the image transmission device 1 in the embodiment includes the image camera 11, the image processor 12, the transmitter 13, the storage 14 and the controller 10. The image camera 11 is configured to capture an image(s). The image processor 12 is configured to perform image processing of the image(s) captured with the image camera 11. The transmitter 13 is configured to transmit an image(s) obtained by the image processing to one or more image display devices 2 via the transmission line 3. The storage 14 is configured to store two or more kinds of operating conditions for the image processor 12. The controller 10 is configured to select an operating condition corresponding to the image(s) captured with the image camera 11 from the two or more operating conditions stored in the storage 14 to allow the image camera 11 to operate in accordance with the selected operating condition.

The image transmission system in the embodiment includes the image transmission device 1, and one or more image display devices 2 connected with the image transmission device 1 via the transmission line 3. Each image display device 2 includes a transmitter 23 and a display 21, and is configured to allow the transmitter 23 to receive an image transmitted from the image transmission device 1 via the transmission line 3 and to allow the display 21 to display the image received with the transmitter 23.

Since the image transmission device 1 and the image transmission system in the embodiment are configured as stated above, the image processor 12 operates in accordance with an operating condition corresponding to the image(s) captured with the image camera 11, thereby being capable of reducing waste of resources and surely transmitting a necessary image(s).

In the image transmission device 1 of the embodiment, it is preferable that the image camera 11 being configured to capture an image at a prescribed frame rate. Preferably, the image processor 12 is configured to calculate (detect) a degree of a time series variation in images obtained from the image processor 12 and to select and compress one or more images of one or more frames from the images obtained from the image camera 11. Preferably, the controller 10 is configured to select an operating condition corresponding to the degree from the two or more kinds of operating conditions stored in the storage 14. Preferably, the controller 10 is also configured to allow the image processor 12 to operate in accordance with the selected operating condition. Preferably, the controller 10 is further configured to allow the transmitter 13 to transmit one or more images of one or more frames, corresponding to the number of pixels, the number of frames, frame intervals and a compression specification that are contained in the operating condition, to the one or more image display devices 2.

Since the image transmission device 1 in the embodiment is configured as stated above and allows the image processor 12 to operate in accordance with an operating condition corresponding to the degree (variables of the image unstable flag and the image change flag) of the time series variation in images, the time and power required for image transmission can be reduced to a necessity minimum.

In the image transmission device 1 of the embodiment, it is preferable that the controller 10 be configured to select a prescribed operating condition when the degree continuously exceeds a threshold (the image unstable flag is ON) for a prescribed time or more. Preferably, the controller 10 is also configured to activate and allow the image processor 12 to reduce images of two or more frames to produce one frame of (composite) image by arranging thumbnail images of the frames reduced in columns in accordance with the prescribed operating condition (see FIG. 7). Preferably, the controller 10 is further configured to allow the transmitter 13 to transmit the composite image to the one or more image display devices 2.

With the configuration, in the one or more image display devices 2, the composite image is displayed on one or more displays 21 thereof. Accordingly, a user(s) (a surveillant(s)) can be given attention and perform proper countermeasures.

Preferably, the image processor 12 is configured to produce the composite image so that the number of pixels of the composite image is an identical number of pixels of each image of the frames before being reduced.

In the image transmission device 1 of the embodiment, it is preferable that the controller 10 be configured to select a prescribed operating condition when the degree continuously exceeds a threshold (the image unstable flag is ON) for a prescribed time or more. Preferably, the controller 10 is further configured to activate and allow the image processor 12 to select one frame of image (a still image) in accordance with the prescribed operating condition, and allow the transmitter 13 to transmit the image of the selected one frame to the one or more image display devices 2 (see FIGS. 4 and 6).

As stated above, the image transmission device 1 can transmit not pictures but a still image as images having a small change of a subject(s), thereby being capable of reducing waste of resources and surely transmitting a necessary image(s).

In the image transmission device 1 of the embodiment, it is preferable that the controller 10 be configured to select a prescribed operating condition when the degree in pixels, the number of which is a prescribed number or more, in the image exceeds a prescribed threshold. Preferably, the controller 10 is configured to activate and allow the image processor 12 to select an image of one frame in accordance with the prescribed operating condition, and allow the transmitter 13 to transmit the image of the selected one frame (the still image) to the one or more image display devices 2 (see FIGS. 8).

In the image transmission device 1 of the embodiment, it is preferable that the image processor 12 be configured to reduce an image(s) to produce a thumbnail image(s) when operating in accordance with the prescribed operating condition (see FIG. 7). Preferably, the controller 10 is configured to allow the transmitter 13 to transmit the thumbnail image(s) to the one or more image display devices 2.

In the image transmission device 1 of the embodiment, it is preferable that the image processor 12 be configured to compress an image(s) at a relatively high compression ratio to produce a compressed image(s) when operating in accordance with the prescribed operating condition. Preferably, the controller 10 is configured to allow the transmitter 13 to transmit the compressed image(s) to the one or more image display devices 2.

In the image transmission device 1 of the embodiment, it is preferable that the controller 10 be configured to select a prescribed operation condition when the degree in a specified region of the image is larger than the degree in another region exclusive of the specified region. When operating in accordance with the prescribed operating condition, the image processor 12 is preferably configured to select one frame (a frame Fₙ) of image having a minimum distance between the specified region and a center of the image (see FIG. 6). Preferably, the controller 10 is configured to allow the transmitter 13 to transmit the selected one frame (the frame Fₙ) of image to the one or more image display devices 2.

In an embodiment, an image transmission device 1 includes an image camera 11, an image processor 12, a transmitter 13, a storage 14 and a controller 10. The image camera 11 is configured to capture an image to obtain a captured image at a prescribed frame rate. The image processor 12 is configured to perform image processing of the captured image to produce a processed image. The transmitter 13 is configured to transmit the processed image to the one or more image display devices 2 via a transmission line 3. The storage 14 is configured to store at least first and second operating conditions. The first operating condition is for the image processing of a captured image obtained from a predetermined area. The second operating condition is for the image processing under environment that is different from that of the captured image to be obtained from the area. The controller 20 is configured to compare the captured image from the image camera 11 with the captured image previously obtained from the area and thereby to judge whether the captured image from the image camera 11 is the captured image obtained from the area or the captured image under the environment that is different from that of the captured image to be obtained from the area. The controller 10 is also configured to allow the image processor 12 to operate in accordance with the first operating condition stored in the storage 14 when the captured image from the image camera 11 is the captured image obtained from the area, and allow the image processor 12 to operate in accordance with the second operating condition stored in the storage 14 when the captured image from the image camera 11 is the captured image under the environment that is different from that of the captured image to be obtained from the area. This embodiment can judge whether or not the image camera 11 obtains a captured image from the predetermined area. As a result, the image processor 12 can suitably operate according to whether or not the image camera 11 obtains a captured image from the predetermined area.

In an example of this embodiment, the controller 10 is configured to compare a first processing result with a second processing result. The first processing result is a result of the edge extraction processing performed with respect to the captured image from the image camera 11. The second processing result is a result of the edge extraction processing previously performed with respect to a captured image previously obtained from the area. The controller 10 is also configured to allow the image processor 12 to operate in accordance with the first operating condition when a difference obtained from the first and second processing results is within a prescribed range, and allow the image processor 12 to operate in accordance with the second operating condition when the difference is out of the prescribed range.

In another example of the embodiment, the first operating condition includes a condition for producing one or more processed images as pictures or a still image from captured images by the image camera 11. The second operating condition includes a condition for producing a processed image that is one still image including thumbnail images from captured images by the image camera 11, or processed images that are pictures obtained by reducing the number of pixels of each of the captured images. The second operating condition may further include a condition for adding information (e.g., a message) to the processed image(s). The information represents that the captured images by the image camera 11 are captured images under environment that is different from that of captured images to be obtained from the area. In this case, the second operating condition may include a condition for producing a processed image that is one still image from captured images by the image camera 11 to add the abovementioned information to the processed image.

The present invention is not limited to the image transmission device 1, but may be an image transmission method or a program to which various embodiments of this disclosure can be applied.

An image transmission method in accordance with an embodiment is performed by an image transmission device 1 (specifically a controller 10). The image transmission device 1 includes an image camera 11, an image processor 12, a transmitter 13 and a storage 14. The image camera 11 is configured to capture an image. The image processor 12 is configured to perform image processing of the image captured with the image camera 11. The transmitter 13 is configured to transmit the image obtained by the image processing to one or more image display devices 2 via a transmission line 3. The storage 14 is configured to store two or more kinds of operating conditions for the image processor 12. The image transmission method in the embodiment includes selecting an operating condition corresponding to the image captured with the image camera 11 from the two or more operating conditions stored in the storage 14, and allowing the image processor 12 to operate in accordance with the selected operating condition.

A program in accordance with an embodiment functions one or more computers as a controller 10 of an image transmission device 1. The image transmission device 1 includes an image camera 11, an image processor 12, a transmitter 13 and a storage 14. The image camera 11 is configured to capture an image. The image processor 12 is configured to perform image processing of the image captured with the image camera 11. The transmitter 13 is configured to transmit the image obtained by the image processing to one or more image display devices 2 via a transmission line 3. The storage 14 is configured to store two or more kinds of operating conditions for the image processor 12. The program in the embodiment functions the one or more computers as the controller 10 that is configured to select an operating condition corresponding to the image captured with the image camera 11 from the two or more operating conditions stored in the storage 14, and allow the image processor 12 to operate in accordance with the selected operating condition.

While the foregoing has described what are considered to be the best mode and/or other examples, it is understood that various modifications may be made therein and that the subject matter disclosed herein may be implemented in various forms and examples, and that they may be applied in numerous applications, only some of which have been described herein. It is intended by the following claims to claim any and all modifications and variations that fall within the true scope of the present teachings.

## Claims

1. An image transmission device, comprising:
an image camera configured to capture an image;
an image processor configured to perform image processing of the image captured with the image camera;
a transmitter configured to transmit an image obtained by the image processing to one or more image display devices via a transmission line;
a storage configured to store two or more kinds of operating conditions for the image processor; and
a controller configured to select an operating condition corresponding to the image captured with the image camera from the two or more operating conditions stored in the storage to allow the image processor to operate in accordance with the selected operating condition.

2. The image transmission device of claim 1, wherein:
the image camera is configured to capture an image at a prescribed frame rate;
the image processor is configured to calculate a degree of a time series variation in images obtained from the image camera, and to select and compress one or more images of one or more frames from the images obtained from the image camera; and
the controller is configured to
select an operating condition corresponding to the degree from the two or more kinds of operating conditions stored in the storage,
allow the image processor to operate in accordance with the selected operating condition, and
allow the transmitter to transmit one or more images of one or more frames, corresponding to a number of pixels, a number of frames, frame intervals and a compression specification that are contained in the operating condition, to the one or more image display devices.

3. The image transmission device of claim 2, wherein the controller is configured to
select a prescribed operating condition when the degree continuously exceeds a threshold for a prescribed time or more,
activate and allow the image processor to reduce images of two or more frames to produce one frame of composite image by arranging thumbnail images of the frames reduced in columns in accordance with the prescribed operating condition, and
allow the transmitter to transmit the composite image to the one or more image display devices.

4. The image transmission device of claim 3, wherein the image processor is configured to produce the composite image so that a number of pixels of the composite image is an identical number of pixels of each image of the frames before being reduced.

5. The image transmission device of claim 2, wherein the controller is configured to
select a prescribed operating condition when the degree continuously exceeds a threshold for a prescribed time or more,
activate and allow the image processor to select one frame of image in accordance with the prescribed operating condition, and
allow the transmitter to transmit the selected one frame of image to the one or more image display devices.

6. The image transmission device of claim 2, wherein the controller is configured to
select a prescribed operating condition when the degree in pixels, a number of which is a prescribed number or more, in the image exceeds a prescribed threshold,
activate and allow the image processor to select one frame of image in accordance with the prescribed operating condition, and
allow the transmitter to transmit the selected one frame of image to the one or more image display devices.

7. An image transmission device of claim 5 or 6, wherein:
the image processor is configured to reduce the image to produce a thumbnail image when operating in accordance with the prescribed operating condition; and
the controller is configured to allow the transmitter to transmit the thumbnail image to the one or more image display devices.

8. An image transmission device of claim 5 or 6, wherein:
the image processor is configured to compress the image at a relatively high compression ratio to produce a compressed image when operating in accordance with the prescribed operating condition; and
the controller is configured to allow the transmitter to transmit the compressed image to the one or more image display devices.

9. The image transmission device of claim 2, wherein:
the controller is configured to select a prescribed operating condition when the degree in a specified region of the image is larger than the degree in another region exclusive of the specified region; and
the image processor is configured, when operating in accordance with the prescribed operating condition, to
select one frame of image having a minimum distance between the specified region and a center of the image, and
allow the transmitter to transmit the selected one frame of image to the one or more image display devices.

10. The image transmission device of claim 1, wherein:
the image camera is configured to capture an image to obtain a captured image at a prescribed frame rate;
the image processor is configured to perform image processing of the captured image to produce a processed image;
the transmitter is configured to transmit the processed image to the one or more image display devices via the transmission line;
the storage is configured to store at least first and second operating conditions, the first operating condition being for image processing of a captured image obtained from a predetermined area, the second operating condition being for image processing under environment that is different from that of the captured image to be obtained from the area; and
the controller is configured to
compare the captured image from the image camera with the captured image previously obtained from the area and thereby to judge whether the captured image from the image camera is the captured image obtained from the area or the captured image under the environment that is different from that of the captured image to be obtained from the area,
allow the image processor to operate in accordance with the first operating condition stored in the storage when the captured image from the image camera is the captured image obtained from the area, and
allow the image processor to operate in accordance with the second operating condition stored in the storage when the captured image from the image camera is the captured image under the environment that is different from that of the captured image to be obtained from the area.

11. An image transmission system, comprising:
an image transmission device of any one of claims 1 to 10; and
one or more image display devices connected with the image transmission device via the transmission line, wherein
each of the one or more image display devices comprises a second transmitter and a display, and is configured to allow the second transmitter to receive the image transmitted from the image transmission device via the transmission line and allow the display to display the image received with the second transmitter.
